# EUROPEAN PATENT APPLICATION

(11) **EP 1 800 847 A1**
(43) Date of publication of application: **27.06.2007**
(21) Application number: 05781390.9
(22) Date of filing: 02.09.2005
(51) Int. Cl.: B29D 30/48, B29C 47/14, B29C 47/32, B29K 21/00, B29L 7/00, B29L 30/00

(54) **METHOD OF FORMING BEAD FILLER**

(30) Priority: 10.09.2004 JP 2004264107
(71) Applicant: Bridgestone Corporation, Tokyo 104-8340 (JP)
(72) Inventor: SENBOKUYA, Takashi c/o BRIDGESTONE CORPORATION, Kodaira-shi, Tokyo 1878531 (JP); SATA, Yoshiyuki c/o BRIDGESTONE CORPORATION, Kodaira-shi, Tokyo 1878531 (JP)
(74) Representative: Whalley, Kevin
(86) International application number: PCT/JP2005/016124
(87) International publication number: WO 2006/028018

(57) **Abstract**

A method of forming a bead filler (10) by laminating a rubber ribbon (11) on a bead core (12) in a direction from the radially inner side to the radially outer side. The rubber ribbon (11) has a portion forming the radially innermost layer of the bead filler (10), which is thicker than its portion forming the radially outermost layer. A tip end (19) of the bead filler having a sharp shape can be accurately formed, thereby allowing an efficient formation of a bead filler (10) having a complicated cross sectional shape, or a bead filler (10) comprised of two or more kinds of rubber.

## Description

### TECHNICAL FIELD

The present invention relates to a method of forming a bead filler constituting a tire by laminating a rubber ribbon and, in particular, to a method allowing formation of the bead filler with improved efficiency and high accuracy.

### BACKGROUND ART

In order to realize a small-sized extrusion facility, improve the tire uniformity and flexibly adapt to a small-lot and multiple-size production system, there has been conventionally known a method of forming a rubber member of a predetermined cross-section by extruding a rubber ribbon from a small extruder and directly winding and laminating the rubber ribbon onto a rotating carrier. With respect to the bead filler also, there have been proposed various forming methods in which the rubber ribbon is laminated.

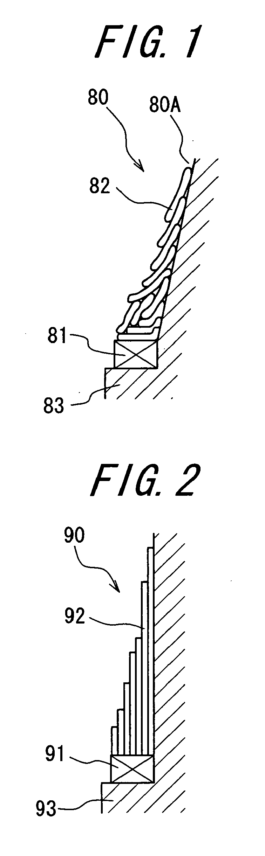

According to one of such proposals, as shown in the cross-sectional view of FIG. 1, a rubber ribbon 82 of a constant cross-section is wound onto a rotating carrier 83 and laminated from a radially inner side to a radially outer side, with the outer peripheral surface of a bead core 81 as the starting point, so as to form a bead filler 80 of a desired cross-section (refer to Patent Document 1). According to another proposal, as shown in the cross-sectional view of FIG. 2, a robber ribbon 92 is wound so that its width direction is oriented in the radial direction of a tire and the inner edges of successive turns as seen in the width direction of the rubber ribbon are aligned with the outer peripheral surface of a bead core 91, and the rubber ribbon is laminated from the widthwise inner side to the outer side of a tire, with the surface of a rotating carrier as a starting point. In this instance, the rubber ribbon has a variable width and becomes narrower from the inner side toward the outer side as seen in the width direction (refer to Patent Document 2).
- Patent Document 1: JP 2002-355878 A
- Patent Document 2: JP 2001-179847 A

### DISCLOSURE OF THE INVENTION

### (Problems to be Solved by the Invention)

In the method of the former proposal, since a rubber ribbon 82 of a constant cross-section is wound, it is possible to simply constitute the system. On the other hand, however, if the thickness of the rubber ribbon is increased with an attempt to provide an improved efficiency by shortening the cycle time for the formation of a bead filler, the tip end 80A of the bead filler on its radially outer side cannot be formed into a desired sharp shape. Conversely, if the thickness of the rubber ribbon is reduced to allow formation of a tip end 80A with a sharp shape, in order to form a desired total shape, the rubber ribbon must be wound by increased turns so as to prolong the cycle time.

In the method of the latter proposal, it is necessary to use a rubber ribbon having a width that becomes narrower from the inner side toward the outer side, as seen in the width direction, thereby giving rise to a problem that the cross-sectional shape of the bead filler that can be formed is extremely limited. Moreover, the proposed method encounters a further problem that it is impossible to form a bead filler in which a hard rubber is arranged on the radially inner side and a soft rubber is arranged on the radially outer side, as is often adopted to preserve the required performance of tires.

The present invention has been conceived in view of these problems. Thus, it is an object of the present invention to provide a method of forming a bead filler, capable of precisely forming a sharp tip end, and efficiently forming a bead filler having a complex cross-sectional shape or a bead filler comprised of at least two kinds of rubbers.

### (Means for Solving the Problem)

A first aspect of the present invention resides in a method of forming a bead filler comprised of one kind of rubber arranged on a radially outer side of a bead core, by lamination of a rubber ribbon on the bead core, wherein:
the lamination of the rubber ribbon is carried out using a rubber ribbon having a thickness, which is larger in its portion corresponding to a radially innermost layer of the bead filler than in its portion corresponding to a radially outermost layer of the bead filler, as the lamination proceeds layer by layer in a direction from the radially inner side to the radially outer side.

A second aspect of the present invention resides in a method of forming a bead filler comprised of at least two kinds of rubbers arranged on a radially outer side of a bead core and being different in hardness at least between a radially innermost portion and a radially outermost portion, wherein:
for each kind of rubber, the lamination of the rubber ribbon is carried out using a rubber ribbon having a thickness, which is larger in its portion corresponding to a radially innermost layer of the bead filler than in its portion corresponding to a radially outermost layer of the bead filler, as the lamination proceeds layer by layer in a direction from the radially inner side to the radially outer side.

A third aspect of the present invention resides in a method of forming a bead filler according to the second aspect, wherein at least one kind of rubber constituting the bead filler is formed by laminating a rubber ribbon with a constant thickness.

A fourth aspect of the present invention resides in a method of forming a bead filler according to the second aspect, wherein at least one kind of rubber constituting the bead filler is formed by laminating a rubber ribbon has a thickness, which is larger in its portion corresponding to a radially innermost layer of said rubber than in its portion corresponding to a radially outermost layer of said rubber.

A fifth aspect of the present invention resides in a method of forming a bead filler according to any one of the first to fourth aspects, wherein the rubber is extruded from an orifice having a predetermined cross-section and passed through a gap between a pair of rotating rollers of a roller die, and the gap is changed to form a rubber ribbon having a thickness, which is larger in its portion corresponding to the radially innermost layer than in its portion corresponding to the radially outermost layer.

A sixth aspect of the present invention resides in a method of forming a bead filler according to any one of the first to fourth aspects, wherein the rubber is extruded from an orifice having a predetermined cross-section and passed through a gap between a pair of rotating rollers of a roller die, and the rotating rollers are driven at a rotational speed that is changed to form a rubber ribbon having a thickness, which is larger in its portion corresponding to the radially innermost layer than in its portion corresponding to the radially outermost layer.

A seventh aspect of the present invention resides in a method of forming a bead filler according to the fifth or sixth aspect, wherein the rubber ribbon passed through the gap of the roller die is supported on, and transferred by one of said rotating rollers, and said one rotating roller is urged against an outer periphery of the bead core under rotation so as to directly transfer the rubber ribbon from the said roller onto the bead core for lamination thereon.

### (Effects of the Invention)

With the method according to the first aspect of the invention, since the lamination of the rubber ribbon is carried out using a rubber ribbon having a thickness, which is larger in its portion corresponding to a radially innermost layer of the bead filler than in its portion corresponding to a radially outermost layer of the bead filler, as the lamination proceeds layer by layer in a direction from the radially inner side to the radially outer side, it is possible to precisely form a sharp tip end without sacrificing the operational efficiency, and to form a bead filler having a complex cross-sectional shape or a bead filler comprised of at least two kinds of rubbers.

With the method according to the second aspect of the invention, as regards the bead filler comprised of at least two kinds of rubbers as well, since the lamination of the rubber ribbon for each kind of rubber is carried out using a rubber ribbon having a thickness, which is larger in its portion corresponding to a radially innermost layer of the bead filler than in its portion corresponding to a radially outermost layer of the bead filler, as the lamination proceeds layer by layer in a direction from the radially inner side to the radially outer side, it is possible to precisely form a sharp tip end without sacrificing the operational efficiency, and to form a bead filler having a complex cross-sectional shape or a bead filler comprised of at least two kinds of rubbers, similarly to the first aspect.

With the method according to the third aspect of the invention, since at least one kind of rubber constituting the bead filler is formed by laminating a rubber ribbon with a constant thickness, it is possible to adopt a rubber ribbon forming device with a simple structure.

With the method according to the fourth aspect of the invention, since at least one kind of rubber constituting the bead filler is formed by laminating a rubber ribbon has a thickness, which is larger in its portion corresponding to a radially innermost layer of said rubber than in its portion corresponding to a radially outermost layer of said rubber, it is possible to accurately form a share tip end and/or further improve the operational efficiency.

With the method according to the fifth aspect of the invention, since the gap between a pair of rotating rollers of a roller die is changed to form a rubber ribbon having a variable thickness, it is possible to control the thickness with high precision.

With the method according to the sixth aspect of the invention, since the rotational speed of the rotating rollers is changed to form a rubber ribbon having a variable thickness, it is possible to control the thickness in a facilitated manner.

With the method according to the seventh aspect of the invention, since the rubber ribbon passed through the gap of the roller die is supported on, and transferred by one of said rotating rollers, and said one rotating roller is urged against an outer periphery of the bead core under rotation so as to directly transfer the rubber ribbon from the said roller onto the bead core for lamination thereon, it is possible to realize a compact and simple arrangement of the apparatus.

### BRIEF DESCRIPTION OF THE DRAWINGS

FIG. 1 is a sectional view of a bead filler formed by a conventional rubber ribbon lamination method;
FIG. 2 is a sectional view of a bead filler formed by another conventional rubber ribbon lamination method;
FIG. 3 is a sectional view of a bead filler comprised of one kind of rubber, formed by a rubber ribbon lamination method according to the present invention;
FIG. 4 is a sectional view of a bead filler comprised of two kinds of rubbers, formed by a rubber ribbon lamination method according to the present invention;
FIG 5 is a sectional view of a bead filler comprised of two kinds of rubbers, formed by another rubber ribbon lamination method according to the present invention;
FIGS. 6(a) and 6(b) are front view and top plan view, respectively, of a ribbon forming device for forming a rubber ribbon; and
FIGS. 7(a) and 7(b) are front view and top plan view, respectively, of a modification of the ribbon forming device.

### (Listing of Reference Numerals)

1 ... ribbon forming device
2 ... extruder
3 ... roller die
4 ... festoon
8, 9 ... gaps
10 ... bead filler
11 ... rubber ribbon
12 ... bead core
13 ... rotatable carrier
13a ... outer peripheral bottom surface of the carrier
13b ... outer peripheral side surface of the carrier
19 ... tip end of the bead filler
20 ... bead filler
20a, 20b ... rubber portions
21a, 21b ... rubber ribbons
22 ... bead core
23 ... rotatable carrier
23a ... outer peripheral bottom surface of the carrier
23b ... outer peripheral side surface of the carrier
29 ... tip end of the bead filler
30 ... bead filler
30a, 30b ...rubber portions
31a, 31 b ... rubber ribbons
32 ...bead core
33 ... rotatable carrier
33a ... outer peripheral bottom surface of the carrier
33b ... outer peripheral side surface of the carrier
39 ... tip end of the bead filler

### BEST MODE FOR CARRYING OUT THE INVENTION

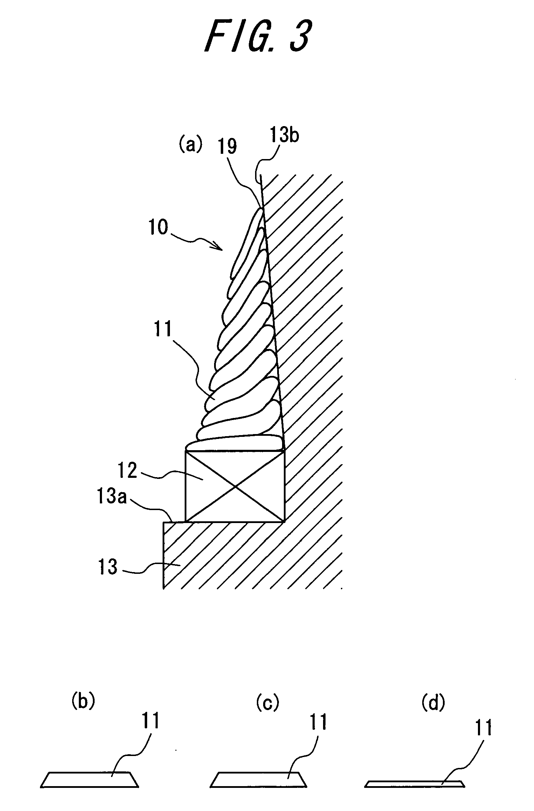

The present invention will be described below with reference to the preferred embodiments shown in the drawings. FIG. 3 as a whole illustrates an embodiment of the present invention wherein the bead filler is comprised of one kind of rubber. Among others, FIG. 3(a) is a sectional view of the bead filler formed by a method according to the invention, and FIGS. 3(b) to 3(d) are sectional views of those portions of the rubber ribbon, which correspond to the radially innermost layer of the bead filler, radially intermediate layer of the bead filler, and radially outermost layer of the bead filler, respectively.

When a bead filler 10 is formed, a rubber ribbon 11 is wound on an outer periphery of a bead core 12 which has been previously set on an outer peripheral bottom surface 13a of a rotatable carrier 13, and laminated in successive layers from the radially inner side to the radially outer side of a tire, while urging the rubber ribbon 11 against an outer peripheral side surface 13b of the carrier 13 as a base surface. In this way, according to the present invention, the rubber ribbon 11 is laminated from the radially inner side to the outer side, as opposed to the case in which wherein annular sheets are stacked from the center side to the end side as seen in the width direction of the tire. Therefore, it is possible to realize a higher freedom degree in connection with the cross-sectional shape of the bead filler that can be formed, and to form a bead filler that is comprised of rubbers which are different in hardness between and the inner side and the outer side as seen in the radial direction, as will be described below.

Moreover, the portion of the rubber ribbon shown in FIG. 3(b), which corresponds to the radially innermost layer of the bead filler, is thicker than the portion of the rubber ribbon shown in FIG 3(d), which corresponds to the radially outermost layer of the bead filler. The thin portion of the rubber ribbon makes allows a precise formation of a sharp tip end 19 of the bead filler, while the thick portion of the rubber ribbon allows an efficient formation of the major part of the bead filler with a reduced number of winding turns.

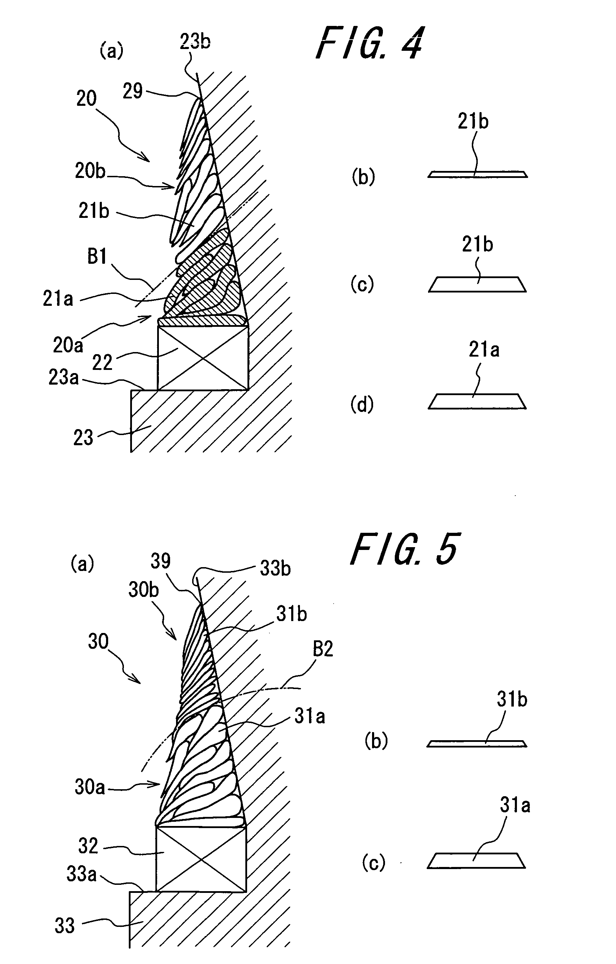

FIG. 4 as a whole illustrates another embodiment of the present invention wherein the bead filler is comprised of two kinds of rubbers. Among others, FIG 4(a) is a sectional view of the bead filler formed by a method according to the invention. The bead filler 20 is comprised of two kinds of rubber portions 20a, 20b which are different in hardness and arranged adjacent to each other on both sides of a boundary B1. The rubber portion 20a situated on the radially inner side is formed by winding a rubber ribbon 21 a on an outer periphery of a bead core 22 which has been previously set on an outer peripheral bottom surface 23a of a rotatable carrier 23, and laminated from the radially inner side to the radially outer side of a tire, while urging the rubber ribbon 21 a against an outer peripheral side surface 23b of the carrier 23 as a base surface. Similarly, the rubber portion 20b situated on the radially outer side is formed by winding a rubber ribbon 21b on the outer periphery of the rubber portion 20a, and laminated from the radially inner side to the radially outer side of the tire, while urging the rubber ribbon 21b against the outer peripheral side surface 23b of the carrier 23 as a base surface.

FIG. 4(b) is a sectional view of the rubber ribbon 21 a, and FIGS. 4(c) and 4(d) are sectional views of those portions of the rubber ribbon 21 b, which correspond to the radially inner most portion and radially outermost portion, respectively. The rubber portion 20a is formed by laminating the rubber ribbon 21 a which is comprised of a hard rubber. The rubber ribbon 21 a for the rubber portion 20a has an initial cross-sectional shape before the winding, which is the same at any region of the rubber portion 20a.

On the other hand, the rubber portion 20b is formed by laminating the rubber ribbon 21b which is comprised of a soft rubber. The rubber ribbon 21b for the rubber portion 20b has an initial cross-sectional shape before the winding, which is thick in its portion corresponding to the radially outermost layer of the rubber portion 20b, and thin in its portion corresponding to the radially outermost layer of the rubber portion 20b. By using such rubber ribbon 21b with a variable thickness, it is possible to perform a precise formation of a sharp tip end 19 of the bead filler, while allowing an efficient formation of the major part of the bead filler with a reduced number of winding turns.

FIG. 5 as a whole illustrates a modification of the present invention wherein the bead filler comprised of two kinds of rubbers is formed by a method that is different from the method shown in FIG. 4. Among others, FIG. 5(a) is a sectional view of the bead filler formed by the modified method. The bead filler 30 is comprised of two kinds of rubber portions 30a, 30b which are different in hardness and arranged adjacent to each other on both sides of a boundary B2. The rubber portion 30a situated on the radially inner side is formed by winding a rubber ribbon 31 a on an outer periphery of a bead core 32 which has been previously set on an outer peripheral bottom surface 33a of a rotatable carrier 33, and laminated from the radially inner side to the radially outer side of a tire, while urging the rubber ribbon 31a against an outer peripheral side surface 33b of the carrier 33 as a base surface. Similarly, the rubber portion 30b situated on the radially outer side is formed by winding a rubber ribbon 31b on the outer periphery of the rubber portion 30a, and laminated from the radially inner side to the radially outer side of the tire, while urging the rubber ribbon 31b against the outer peripheral side surface 33b of the carrier 33 as a base surface. In this respect, the method shown in FIG. 5 is similar to that shown in FIG 4.

FIGS. 5(b) and 5(c) are sectional views showing the rubber ribbon 31a and the rubber ribbon 31b, respectively. The modified method differs from the method shown in FIG 4, in that the rubber ribbon 31b forming the rubber portion 30b, too, has a constant thickness. In this instance, in order to reduce the number of winding, the rubber ribbon 31 a has a thick cross-section as compared to the rubber ribbon 31 b having a thin cross-section for precisely forming the sharp tip end 39. With such a modified method, it is possible to precisely form the tip end 39 without sacrificing the winding efficiency. Moreover, since the rubber ribbons 31a, 31b of constant thickness are used, it is possible to configure the rubber ribbon forming device in a facilitated manner.

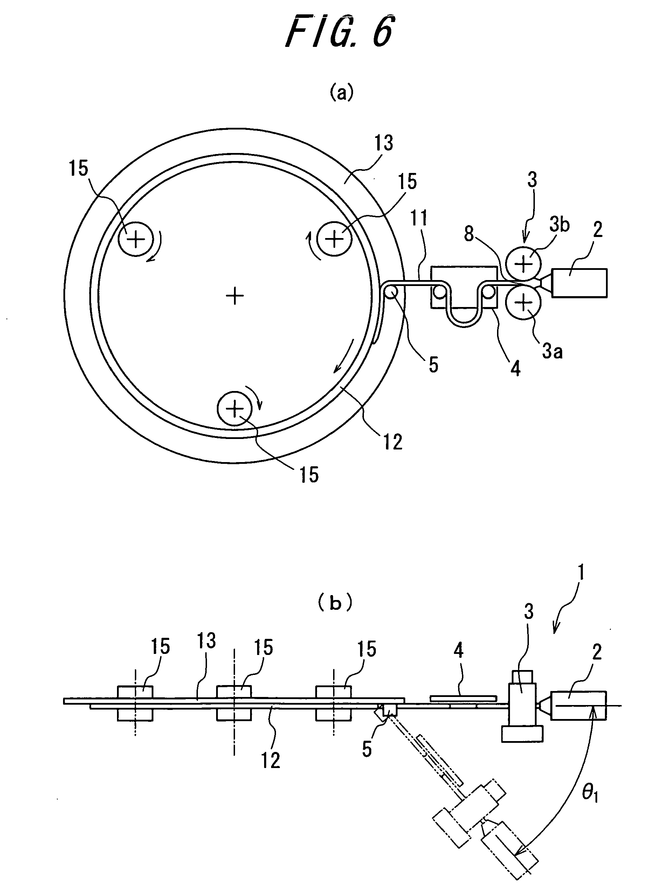

The method for forming the rubber ribbon and transferring it onto the bead core will be explained below, with reference to the bead filler 10 shown in FIG. 1, by way of example, which is comprised of a single kind of rubber. FIGS. 6(a) and 6(b) illustrate the rubber ribbon forming device 1, which is comprised of an extruder 2 for extruding rubber from an orifice of a predetermined cross-sectional shape, a roller die 3 for shaping the extruded rubber into a rubber ribbon 11 of a predetermined cross-sectional shape, an applicator roller 5 for applying the rubber ribbon 11 onto the bead core 12 that is driven by a rotary driving means 15, and a festoon means 4 adapted to compensate for an excessive or insufficient feeding amount of the rubber ribbon 11 between the roller die 3 and the applicator roller 5.

In the figure, reference numeral 13 denotes a rotatable support as a basis for laminating the rubber ribbon 11.

The roller die 3 is comprised of two rollers 3a, 3b and arranged such that the dimension of a gap 8 formed between the rollers 3a, 3b can be varied. The extruded rubber is passed through the gap 8, and the dimension of the gap 8 is varied during the passage so as to form a rubber ribbon 11 with a variable thickness.

Instead of varying the dimension of the gap 8, the rotational speed on the pair of rollers 3a, 3b may be varied to form a rubber ribbon 11 with a variable thickness. This is because the feeding amount of rubber per unit time length is changed while the feeding amount of rubber from the extruder 2 per unit time length is constant.

As shown in FIG 1, the bead filler 10 has a shape with a sharp tip end. Thus, it is necessary to laminate the rubber ribbon 11 with various inclination angle relative to the outer peripheral surface of the bead core 12. To this end, the applicator roller 5 is arranged so that it can be inclined relative to the outer peripheral surface of the bead core 12. In this instance, the ribbon forming device 1 as a whole, including the extruder 2 is arranged so that it can be swung together with the applicator roller 5.

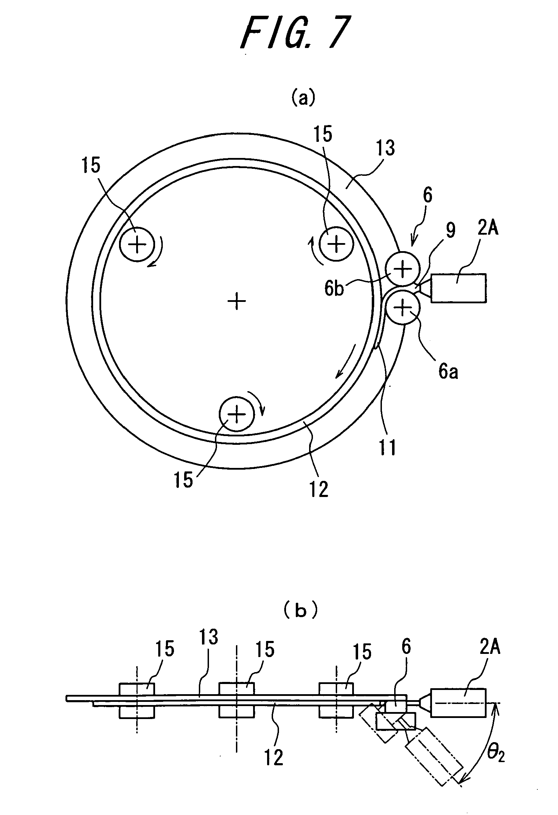

FIG. 7 shows a ribbon forming device 1A which is a variation of the ribbon forming device 1, and comprised of an extruder 2A for extruding rubber from an orifice of a predetermined cross-sectional shape, and a roller die 6 for shaping the extruded rubber into a rubber ribbon 11 of a predetermined cross-sectional shape. One of the rollers 6a, 6b of the roller die 6 forming a pair (i.e., roller 6a) serves to transfer the rubber ribbon 11 that has been shaped during the passage of a gap 9 between the rollers 6a, 6b, while supporting the rubber ribbon 11 thereon. The roller 6a is arranged so that it can be urged against the bead core 12 so as to transfer the rubber ribbon 11 onto the bead core 12. Thus, the roller 6a also serves as the applicator roller for directly applying the rubber ribbon 11 onto the bead core.

The rubber ribbon forming device 1A is configured so as to vary the dimension of the gap 9 or change the rotational speed of the rollers 6a, 6b for realizing a continuously variable thickness of the rubber ribbon 11, and adjust the inclination angle of the rubber ribbon 11 to be laminated, relative to the outer peripheral surface of the bead core 12, as in the rubber ribbon forming device 1. Thus, a superfluous explanation is omitted.

### INDUSTRIAL APPLICABILITY

The present invention is applicable to other rubber members constituting tires.

## Claims

1. A method of forming a bead filler comprised of one kind of rubber arranged on a radially outer side of a bead core, by lamination of a rubber ribbon on the bead core, wherein:
the lamination of the rubber ribbon is carried out using a rubber ribbon having a thickness, which is larger in its portion corresponding to a radially innermost layer of the bead filler than in its portion corresponding to a radially outermost layer of the bead filler, as the lamination proceeds layer by layer in a direction from the radially inner side to the radially outer side.

2. A method of forming a bead filler comprised of at least two kinds of rubbers arranged on a radially outer side of a bead core and being different in hardness at least between a radially innermost portion and a radially outermost portion, wherein:
for each kind of rubber, the lamination of the rubber ribbon is carried out using a rubber ribbon having a thickness, which is larger in its portion corresponding to a radially innermost layer of the bead filler than in its portion corresponding to a radially outermost layer of the bead filler, as the lamination proceeds layer by layer in a direction from the radially inner side to the radially outer side.

3. A method of forming a bead filler according to claim 2, wherein at least one kind of rubber constituting the bead filler is formed by laminating a rubber ribbon with a constant thickness.

4. A method of forming a bead filler according to claim 2, wherein at least one kind of rubber constituting the bead filler is formed by laminating a rubber ribbon has a thickness, which is larger in its portion corresponding to a radially innermost layer of said rubber than in its portion corresponding to a radially outermost layer of said rubber.

5. A method of forming a bead filler according to any one of claims 1 to 4, wherein the rubber is extruded from an orifice having a predetermined cross-section and passed through a gap between a pair of rotating rollers of a roller die, and the gap is changed to form a rubber ribbon having a thickness, which is larger in its portion corresponding to the radially innermost layer than in its portion corresponding to the radially outermost layer.

6. A method of forming a bead filler according to any one of claims 1 to 4, wherein the rubber is extruded from an orifice having a predetermined cross-section and passed through a gap between a pair of rotating rollers of a roller die, and the rotating rollers are driven at a speed that is changed to form a rubber ribbon having a thickness, which is larger in its portion corresponding to the radially innermost layer than in its portion corresponding to the radially outermost layer.

7. A method of forming a bead filler according to claim 5 or 6, wherein the rubber ribbon passed through the gap of the roller die is supported on, and transferred by one of said rotating rollers, and said one rotating roller is urged against an outer periphery of the bead core under rotation so as to directly transfer the rubber ribbon from the said roller onto the bead core for lamination thereon.
